# EUROPEAN PATENT SPECIFICATION

(11) **EP 3 654 750 B1**
(45) Date of publication and mention of the grant of the patent: **29.05.2024**
(21) Application number: 18749547.8
(22) Date of filing: 02.07.2018
(51) Int. Cl.: A01C 7/04, A01C 7/10

(54) **MATERIAL DISPENSING DEVICE FOR AGRICULTURAL MACHINERY**
MATERIALAUSGABEVORRICHTUNG FÜR LANDWIRTSCHAFTLICHE MASCHINEN
DISPOSITIF DE DISTRIBUTION DE MATÉRIAU DESTINÉ À DES MACHINES AGRICOLES

(30) Priority: 19.07.2017 IT 201700082220
(43) Date of publication of application: 27.05.2020
(73) Proprietor: MATERMACC SRL, 39100 Bolzano (BZ) (IT)
(72) Inventor: BRAGATTO, Enrico, 30021 Caorle (VE) (IT)
(74) Representative: Petraz, Gilberto Luigi
(86) International application number: PCT/IB2018/054906
(87) International publication number: WO 2019/016638

(56) References cited:
- US-A- 4 159 064
- US-A1- 2014 261 118
- US-A1- 2016 366 814

## Description

### TECHNICAL FIELD

This invention relates to a dispensing device for agricultural machinery that dispenses material, in particular that dispenses seeds in soil.

### PRIOR ART

As is known, in automated agriculture the use of agricultural machinery, whether tractor-mounted or self-propelled, is widespread and is intended for dispensing material such as, for example, fertilizer or seeds.

A typical example of such agricultural machinery are precision sowing machines, machines capable of dropping one seed at a time and designed such that the spacing between two seeds planted in the soil is maintained constant.

It is indeed important to ensure that the plants grow at an equal distance apart, so that each plant has an adequate amount of soil for its growth.

Precision sowing machines comprise a plurality of planting units supported by a frame that rests on the ground via at least one wheel and is connected to a tractor for pulling the sowing machine itself.

Each sowing unit comprises at least one dispensing device provided with a chamber that has an inlet and an outlet for the seeds to be dispensed and that is fluidly connected to pneumatic means that generate a negative pressure inside the chamber itself.

In general, the rotating dispensing element divides the chamber into two compartments, a first compartment being in communication with the inlet and the outlet of the chamber and a second compartment being in fluidic communication with the pneumatic means.

Additionally, inside the chamber there is housed a perforated disc-shaped rotating dispensing element, able to receive and temporarily hold back the seeds as a result of the negative pressure and transport them from the inlet to the outlet of the chamber until releasing a predetermined quantity of granular material in a conveyor duct, that is able to carry the granular material in the vicinity of the soil on which it must be dropped.

It is essential for the proper operation of the dispensing device that said negative pressure inside the dispenser chamber is properly maintained.

If the proper pressure value is not maintained in the dispenser chamber, the seeds do not remain attached to the dispensing disc or, if the air loss is not excessive they attach with a weak force to the holes thereof.

If instead the pressure is excessive, it is difficult for the seeds to detach from the seed plate and, as a result, they drop to the ground with delay.

Either way, the seeds will be sown poorly because they will be distributed unevenly on the soil.

The causes of a pressure loss can be many, including, for example, the bursting of a tube in the pneumatic suction system, undesired foreign objects inside the dispenser, the cover of the seed dispenser left open, the improper installation of the selector in relation to the seed plate and, last but not least, the wear of the gasket that separates the two half-shells of the dispenser.

However, the negative effects due to the loss of pressure inside the dispenser become manifest at a later time i.e. when the plants begin to grow and it is noticed that their distance from each other is not as precise as expected.

Moreover, if the agricultural machine is not equipped with an electronic sowing control system, the problem will become evident only once the plants rise to the surface, in other words when it is definitely too late.

Electronic sowing control systems are known in the industry but are still not widely used and they operate according to the ISO 7256/1 standard and provide for statistical calculation of the sowing quality.

However, the real cause behind a diminished sowing quality cannot be identified with such electronic sowing control systems.

It is to be noted that there are dispensers that operate on the basis of a difference in pressure between the two compartments into which the dispensing disc divides the chamber of the dispenser, but instead of maintaining a negative pressure in the compartment that houses the pneumatic means, such dispensers provide pneumatic means that are configured to generate an increase in pressure in the first compartment that communicates with the inlet and outlet of the chamber, like for example, a pump.

In these dispensers, the dispensing element receives and temporarily holds the seeds back as a result of the increased pressure in the first compartment and transports them from the inlet to the outlet of the chamber until a predetermined quantity is released on the soil.

In this second type of dispenser, problems like the ones described above can arise in the event of a pump malfunction or other malfunctions, in this particular case due to an insufficient pressure in the first compartment of the chamber.

US2014/261118, US2016/366814 and US4159064 disclose a dispensing device comprises a pressure sensor capable of measuring the pressure value inside a chamber wherein a rotating dispensing element is housed.

A purpose is to provide a system that enables action to be taken in the event of problems with the hermetic seal of the dispenser chamber under negative pressure.

Such purposes are achieved by the characteristics of the invention set forth in the independent claim. The dependent claims outline preferred and/or particularly advantageous aspects of the invention.

### DISCLOSURE OF INVENTION

An embodiment of the invention, particularly, provides a dispensing device of material for an agricultural machine comprising a chamber having an inlet and an outlet for the material that is to be dispensed, pneumatic means to create a pressure variation inside the chamber, a rotating dispensing element housed in the chamber and capable of receiving the material as a result of the pressure value inside the chamber and transporting it from the inlet to the outlet of the chamber.

According to the invention, the dispensing device comprises a sensor capable of measuring the pressure value inside the chamber.

The use of a pressure sensor inside the chamber of the dispenser enables one to immediately understand if there are problems with the hermetic seal of the chamber under negative pressure and/or malfunctions of the pneumatic system that generates said negative pressure, and to intervene accordingly, in any case by interrupting what would otherwise result in a poor sowing.

In the case wherein the dispensing device operates using means that create an increase of pressure inside the chamber, such a solution enables one to immediately understand if there are problems related to the generation and/or maintenance of the proper operating pressure.

According to an aspect of the invention, the rotating dispensing element divides the chamber into two compartments, a first compartment being in communication with the inlet and the outlet of the chamber and a second compartment being in fluidic communication with the pneumatic means.

According to a particular aspect of the invention, the pressure sensor is placed at a wall that closes off the second compartment from the outside.

An advantage of this embodiment is that the sensor is positioned in proximity to the volume where the initial problems related to an improper maintenance of the negative pressure arise.

In a variation of the invention the pressure sensor is placed at the first compartment.

The pressure sensor is connected to a control unit that receives from said sensor a signal representative of the pressure value inside the chamber.

This has the advantage of making an electronic system for real- time control of the pressure inside the dispenser chamber possible.

The invention provides for the connection of the control unit to an optical and/or acoustic warning device configured to be activated if the pressure value inside the chamber measured by the pressure sensor differs from a pre-set threshold value.

This has the advantage of warning the operator of the agricultural machine as soon as there is a failure in the system that ensures the negative pressure or the increase in pressure, as applicable, inside the dispenser chamber, thereby preventing the operator from proceeding with a low-quality sowing.

According to an additional aspect of the invention, the control unit is configured to communicate the pressure values inside the chamber as measured by the pressure sensor to a remote server.

This embodiment has the advantage of enabling the collection of data from each agricultural sowing machine and scheduling of the maintenance thereof. The invention additionally has as an object a transmitter configured to transmit the pressure values detected by the sensor inside the chamber of the dispensing device to a remote server.

The invention additionally has as an object a sowing machine comprising a material dispensing device to which a pressure sensor capable of measuring the pressure value inside the dispenser chamber is associated.

### BRIEF DESCRIPTION OF DRAWINGS

Additional characteristics and advantages of the invention will be made clearer by the following description given by way of non-limiting example with the aid of the drawings in the annexed tables.
- figure 1 is a front view of a dispensing device in accordance with the invention;
- figure 2 is a view along section A-A of figure 1 of the device in accordance with the invention;
- figure 3 represents a seed dispensing disc belonging to the device of figures 1 and 2.

### BEST MODE FOR CARRYING OUT THE INVENTION

With particular reference to these figures, a dispensing device is globally indicated with 100, some known elements of said dispensing device being only schematically shown with dashed lines.

Dispensing device 100 comprises a casing 101 which is internally hollow and capable of defining a chamber 110 within it that is capable of accommodating a dispensing disc 120 for the material to be dispensed, for example seeds, as will be better described hereafter.

For the sake of simplicity the invention will be described in reference to a type of dispensing device that uses pneumatic means capable of varying the pressure inside the chamber 110. According to the present embodiment, said pneumatic means are configured to generate negative pressure inside the chamber 110, it being understood that the inventive concepts illustrated herein can also apply to dispensers that instead use pneumatic means configured to generate an increase in pressure in said chamber, such as a pump (not represented for the sake of simplicity).

Where necessary, any construction differences that are applicable to the dispensers provided with pneumatic means to generate an increase in pressure in chamber 110 will be indicated hereafter for completeness.

The casing 101 is defined by a first half-shell 102 and a second half-shell 103 capable of being joined together in order to define chamber 110.

In particular, each half-shell 102,103 is defined by a substantially concave body and can be placed with the concave portion directed towards the other half-shell 102,103.

Moreover, the first half-shell 102 comprises a perimeter flange (not represented for the sake of simplicity) that can be coupled and fixed by suitable fixing means, which are in themselves known, to the perimeter flange 104' of the second half-shell 103, for example via a gasket interposed between them.

In use, the casing 101 is disposed in a vertical position wherein the plane of the perimeter flanges is substantially parallel to the vertical, hereafter the terms upper and lower will be used in reference to said position.

The first half-shell 102 comprises a loading hopper 105 obtained in an upper portion of said half-shell and associated to a seed-containing tank (not represented for the sake of simplicity), for the entry of the seeds into the chamber 110, said tank overlying the device 100.

The loading hopper 105 is defined by a chute 115 facing towards the lower portion of the first half-shell 102.

Moreover, the first half-shell 102 comprises a lower protrusion capable of defining, in combination with an equivalent part in the second half-shell 103, an outlet channel 106 through which the seeds exit the chamber 110 towards the soil.

The seed outlet channel 106 is connected to a tube, which is not shown, having an end distal from the chamber 110 and to discharge the seed in a previously created furrow.

Moreover, the first half-shell 102 comprises a through hole 107, for example obtained in an upper portion of the first half-shell 102 itself, for the entry of atmospheric air that is sucked in via suitable pneumatic means being in themselves known.

The through hole 107 is advantageously connected, via a suitable tube, to a filter external to the casing 101.

Moreover, the first half-shell 102 can comprise an additional opening closed with a perforated grating (not shown for the sake of simplicity) said opening enabling the passage of air between the inside and the outside of the chamber 110 (especially the suction of air in chamber 110) during operation of the dispensing device 100.

The second half-shell 103 comprises an opening 108, for example made in a perimeter portion of the second half-shell 103 itself, to which said pneumatic means are connected for the generation of a negative pressure inside the chamber 110.

The pneumatic means comprise an intake duct 130 associated to the chamber 110 at the opening 108.

The intake duct 130 is defined, for example, by a flexible rubber pipe having a first end fixed to the second opening 108 of the chamber 110 and a second end fixed to appropriate pneumatic means in themselves known.

The opening 108 is preferably made in a position such that it is distal to the outlet channel 106 when the two half-shells 102,103 are joined together, such that the opening 108 itself and the outlet channel 106 are different and distinct from each other.

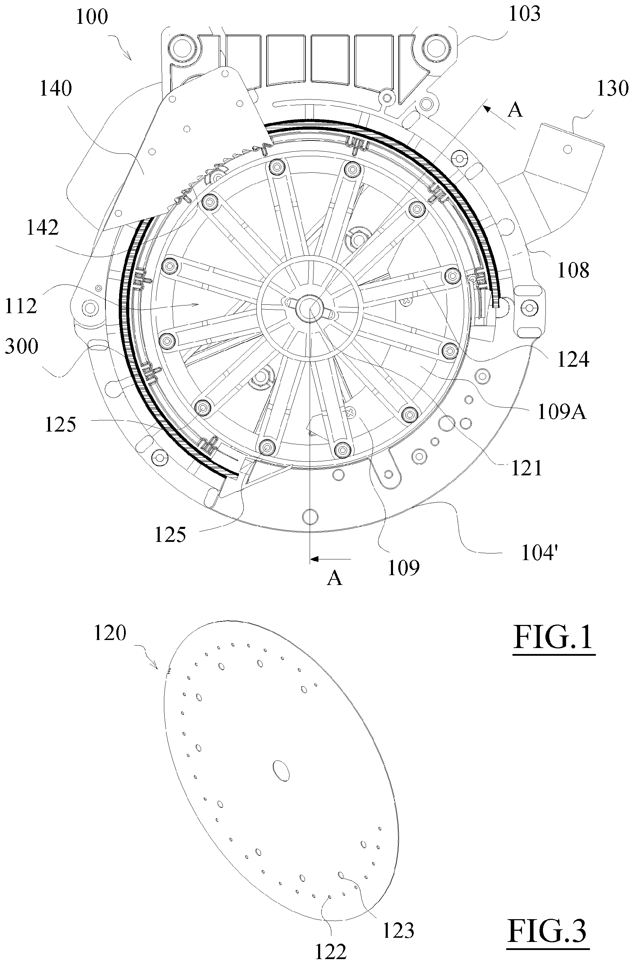

As can be better seen in figure 1, a diversion duct 109 for the air drawn by the pneumatic means is obtained in the second half-shell 103, said diversion channel being in communication with the opening 108.

The diversion duct 109, lies on a plane substantially parallel to the plane of the flange of the first half-shell 102 and comprises an end at the opening 108 and an opposite end directed towards the lower portion (in use) of the second half-shell 103, i.e. the portion of the second half-shell 103 proximal to the outlet channel 106 when the two half-shells 102,103 are joined together.

The diversion duct 109, for example with a rectangular cross-section, communicates with the opening 108 of the second half-shell 103 at one end, and it is open on a plane substantially perpendicular to the plane of the flange of the first half-shell 102 at the other end, while it is closed on the plane parallel to the plane of said flange, for example by a plate 109A.

In the embodiment shown in the figures, the diversion duct 109 is substantially in the shape of an arc of a circle and follows the perimeter edge of the concavity of the second half-shell 103.

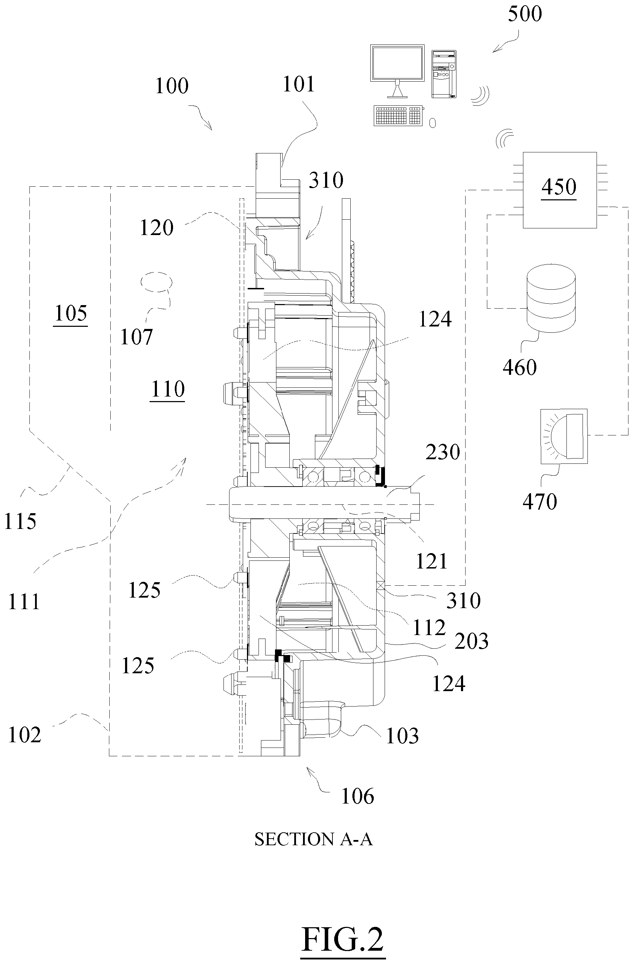

With specific reference to figure 2 the dispensing disc 120 that is housed inside the chamber 110 can be seen by the dashed line said dispensing disc being capable of collecting the material and carrying it from the loading hopper 105 to the outlet channel 106.

The dispensing disc 120 is housed in the chamber 110 so that it lies on a plane parallel to the plane of the flanges of the dispensing device 100 and it substantially occupies the entire volume of the chamber 110 on said plane, in other words the edges of the dispensing disc 120 are substantially flush with the internal walls of the chamber 110.

Furthermore, the dispensing disc 120 is housed in the chamber 110 substantially at the flanges of the dispensing device 100 i.e. away from the bottoms of the concavities of the half-shells 102,103.

In particular, the dispensing disc 120 divides the chamber 110 into two compartments 111,112, a first compartment 111 being in communication with the loading hopper 105 and the outlet channel 106 and a second compartment 112 being in communication with the opening 108.

As illustrated in figure 3, the dispensing disc 120 is preferably defined by a disc, for example made from metal or plastic, comprising a first series of through holes 122 disposed circumferentially in relation to the dispensing disc 120 itself.

In particular, the dispensing disc 120 comprises a series of first holes 122 disposed proximal to the edge of the dispensing disc 120 itself, and a series of second holes 123 disposed distal from the edge of the disc in relation to the first holes 122.

The first holes 122 are equidistant from each other and have a diameter that is smaller than the smallest material to be dispensed, for example seeds. Similarly, the second holes 123 are also equidistant from each other.

At least one part of the first holes 122 (for example at least one) overlaps the diversion duct 109 for the air drawn by the pneumatic means, said diversion duct being in communication with opening 108 and provided in the second half-shell 103 when the dispensing disc 120 is housed in the chamber 110.

In particular, each first hole 122 is capable of overlapping the diversion duct 109 when the dispensing disc 120 itself is rotating about its own axis 121.

Inside the chamber 110 the negative pressure is transmitted from the second compartment 112 to the first compartment 111 via the first holes 122.

The dispensing disc 120 is integral and coaxially fixed to a drive plate 124 coupled to the rotating shaft 230, and in particular, the dispensing disc 120 and the drive plate 124 are fixed together sequentially along the axis 121 of the rotating shaft 230, for example at one of the ends of the shaft itself, with the dispensing disc 120 being directed towards the first half-shell 102 and the drive plate 124 directed towards the second half-shell 103.

The drive plate 124 comprises, for example, a spoke-like configuration integral to the rotation shaft 121 and having a plurality of circumferentially-disposed and protruding pegs 125 along the direction parallel to the axis of the rotating shaft 121.

The pegs 125 are capable of fitting into the second holes 123 of the dispensing disc 120 in a way so as to hold, for example, by interference the dispensing disc 120 itself.

In particular, the pegs 125 are capable of protruding from the dispensing disc 120 towards the first half-shell 102.

The diameter of the drive plate 124 is smaller than the diameter of the dispensing disc 120 and, in particular, the first holes 122 of the dispensing disc 120 protrude beyond the perimeter edge of the drive plate 124.

The rotating shaft 230 is connected to transmission means that are capable of setting it into rotation about its own axis 121 with methods in themselves known in order to define the spacing between the seeds dispensed along the direction of forward motion on the basis of the forward speed of the agricultural machine 10.

Moreover, the device 100 can comprise, a selector device 140 comprising a substantially flat body disposed between the first and the second half-shell 102,103 and partially overlapping an external portion of the dispensing disc 120, in particular overlapping the surface of the dispensing disc 120 that is directed towards the first half-shell 102.

Moreover, selector device 140 is hinged to the casing with possibility of making small rotations about an axis substantially parallel to the plane of the flanges of the dispensing device 100, and comprises means of adjustment, of the position of the selector device 140 in relation to the dispensing disc 120, such as for example an eccentric pin (not shown) housed in a respective slot. The selector device 140 comprises a serrated edge 142 directed towards the inside of the chamber and disposed proximal to the first holes 122 of the dispensing disc 120. The serrated edge 142 is capable of hitting the seeds dragged by the dispensing disc 120 so that a limited number of seeds is dragged, as better described hereafter.

As seen in figure 2, a pressure sensor 310 is further associated to the dispensing device 100 said pressure sensor being capable of measuring the pressure value inside the chamber 110.

For the purposes of this invention, any pressure sensor 310 capable of measuring the atmospheric pressure inside a chamber can be used.

In particular, the pressure sensor 310 is placed in direct communication with the second compartment 112 of the chamber 110, i.e. with the compartment 112 in direct fluidic communication with the pneumatic means.

For example, the sensor 310 can be placed at a wall 203 of the second half-shell 103, where the second half-shell 103 helps to define the second compartment 112 and the wall 203 closes off the second compartment 112 from the outside.

The sensor 310 is thus positioned in proximity to the volume where the initial problems related to an improper maintenance of the negative pressure arise. Furthermore, the pressure sensor 310 is connected to a control unit 450 that receives from said sensor 310 a signal representative of the pressure value inside the chamber 110.

A processor program, for example stored in a memory unit 460, connected to the control unit 450, can use the pressure values received from the sensor 310 according to the methods described hereafter.

The control unit 450 is also connected to an optical and/or acoustic warning device 470 configured to be activated if the pressure value inside the chamber 110 measured by the pressure sensor 310, during the operation of the dispensing device 100, is greater than a pre-set threshold value Pₜₕ.

The proximity of the sensor 310 to the pneumatic means in conjunction with the use of the warning device 470 allow warning the operator of the agricultural machine as soon as there is a failure in the system that ensures the negative pressure inside the dispenser chamber, thereby preventing the operator from proceeding with a low-quality sowing.

In addition to this, the control unit 450 is configured to communicate pressure values measured inside the chamber 110 by the pressure sensor 310 to a remote server 500. In particular the pressure values are transmitted via a transmitter, which is not illustrated and is in itself known, connected to the control unit 450 wherein the transmitter receives the pressure values measured inside the chamber 110 by the pressure sensor 310 from the control unit 450 and sends them to the remote server 500.

This system enables the remote server 500 to monitor in real time the state of a plurality of dispensing devices 100 intervening in the event of failures and/or managing the scheduled maintenance of the various devices.

The operation of the dispensing device 100 as described above is as follows. During operation of the agricultural machine to which said dispensing device 100 is associated suction means create suction from the chamber 110 through the intake duct 130.

Inside the chamber 110 the negative pressure is transmitted from the second compartment 112 to the first compartment 111 via the first holes 122.

The seeds contained in the tank enter the chamber 110 via the loading hopper 105 and, in particular, they collect at the bottom of the first compartment 111 by gravity.

The negative pressure produced in chamber 110 by the pneumatic means causes the seeds to adhere to the dispensing disc 120, in particular in proximity to the first holes 122, and they are dragged by it from the loading hopper 105 towards the outlet channel 106 (with rotation clockwise in relation to figure 2).

During rotation of the dispensing disc 120 the serrated edge 142 of the selector element 140 and the pegs 125 of the drive plate 124 hit the seeds dragged by the dispensing disc itself in order to cause the detachment of the seeds that adhere to the dispensing disc 120 with a weaker adhesion force, i.e. of the seeds that adhere in proximity to, though not at the first holes 122. In that way, the number of seeds that adheres to each first hole 122 is restricted to one.

When a seed comes in proximity to the outlet channel 106, and, in particular when the respective first hole 122 is at the diversion duct 109, the negative pressure that enables the seed to adhere to the surface of the dispensing disc 120 ceases to act on the seed, with the seed falling by gravity into the outlet channel 106.

During all the process steps described, the pressure sensor 310 communicates, via a suitable transmitter, the pressure data to the control unit 450.

The data can be gathered in the form of tables and/or graphs useful for statistical analysis related to the scheduled maintenance of the seed sowing devices.

In the case wherein the pressure value inside the chamber 110 measured by the pressure sensor 310 exceeds a pre-set threshold value Pₜₕ a malfunction condition of the dispenser occurs due to the fact that the negative pressure that should be maintained during operation of the seed dispenser is not reached.

The sowing operation is thus interrupted.

It is to be noted that in the case of dispensers that use pneumatic means to generate an increase in pressure in the chamber 110, according to a variation of the invention that is not represented for the sake of simplicity, the pressure sensor 310 can be placed at the first compartment 111 into which chamber 110 is divided.

In this case, the optical and/or acoustic warning device 470 is activated if the pressure inside the chamber 110 measured by the pressure sensor 310 is lower than the pre-set threshold value Pₜₕ wherein the sowing operation is interrupted it being a sign of a malfunction in the system that generates an increase in pressure in the chamber 110.

In addition all details can be replaced by other technically equivalent elements, within the boundaries set by the appended claims.

In practice the materials used, as well as the contingent shapes and dimensions, can be any according to requirements, without departing from the scope of protection in the following claims.

## Claims

1. Dispensing device (100) of material for an agricultural machine, where the dispensing device (100) comprises:
• a chamber (110) having an inlet (105) and an outlet (106) for the material that is to be dispensed;
• pneumatic means to generate a variation of pressure inside the chamber (110);
• a rotating dispensing element (120) housed in the chamber (110) and capable of receiving the material as a result of the pressure value inside the chamber (110) and transporting it from the inlet (105) to the outlet (106) of the chamber (110),
wherein the above-mentioned dispensing device (100) comprises a pressure sensor (310) capable of measuring the pressure value inside the chamber (110) and connected to a control unit (450) configured to receive from said sensor (310) a signal representative of the pressure value inside the chamber (110), **characterized by** the fact that the control unit (450) is connected to an optical and/or acoustic warning device (470) configured to be activated if the pressure value inside the chamber (110) measured by the pressure sensor (310) differs from a pre-set threshold value (Pₜₕ).

2. Device (100) according to claim 1, wherein the rotating dispensing element (120) divides the chamber (110) into two compartments (111,112), a first compartment (111) being in communication with the inlet (105) and the outlet (106) of the chamber (110) and a second compartment (112) being in fluidic communication with the pneumatic means.

3. Device (100) according to claim 2, wherein the pressure sensor (310) is placed at a wall (203) that closes off the second compartment (112) from the outside.

4. Device (100) according to claim 2, wherein the pressure sensor (310) is placed at the first compartment (111).

5. Device (100) according to claim 1, wherein the control unit (450) is configured to communicate pressure values inside the chamber (110) measured by the pressure sensor (310) to a remote server (500).

6. Device (100) according to claim 5, **characterised by** the fact that it comprises a transmitter connected to the control unit (450) configured to transmit the pressure values inside the chamber (110) detected by the sensor (310) to a remote server (500).

7. Sowing machine comprising a material dispensing device (100) according to the preceding claims.

## Patentansprüche

1. Materialabgabevorrichtung (100) für eine landwirtschaftliche Maschine, wobei die Abgabevorrichtung (100) umfasst:
• eine Kammer (110) mit einem Einlass (105) und einem Auslass (106) für das abzugebende Material;
• pneumatische Mittel zur Erzeugung einer Druckschwankung innerhalb der Kammer (110);
• ein rotierendes Abgabeelement (120), das in der Kammer (110) untergebracht ist, das Material aufgrund des Druckwerts in der Kammer (110) aufnehmen und vom Einlass (105) zum Auslass (106) der Kammer (110) transportieren kann,
wobei die vorstehende Abgabevorrichtung (100) einen Drucksensor (310) umfasst, der den Druckwert innerhalb der Kammer (110) messen kann und mit einer Steuereinheit (450) verbunden ist, die so konfiguriert ist, dass sie von dem Sensor (310) ein Signal empfängt, das den Druckwert innerhalb der Kammer (110) darstellt, und **dadurch gekennzeichnet ist, dass** die Steuereinheit (450) mit einer optischen und/oder akustischen Warneinrichtung (470) verbunden ist, die aktiviert werden kann, wenn der vom Drucksensor ( 310) gemessene Druckwert innerhalb der Kammer (110) von einem voreingestellten Schwellenwert (Pₜₕ) abweicht.

2. Vorrichtung (100) nach Anspruch 1, wobei das rotierende Abgabeelement (120) die Kammer (110) in zwei Kompartimente (111,112) unterteilt, wobei ein erstes Kompartiment (111) mit dem Einlass (105) und dem Auslass (106) der Kammer (110) in Verbindung steht und ein zweites Kompartiment (112) mit den pneumatischen Mitteln in Fluidverbindung steht.

3. Vorrichtung (100) nach Anspruch 2, wobei der Drucksensor (310) an einer Wand (203) angeordnet ist, die das zweite Kompartiment (112) nach außen abschließt.

4. Vorrichtung (100) nach Anspruch 2, wobei der Drucksensor (310) im ersten Kompartiment (111) angeordnet ist.

5. Vorrichtung (100) nach Anspruch 1, wobei die Steuereinheit (450) dazu konfiguriert ist, vom Drucksensor (310) gemessene Druckwerte innerhalb der Kammer (110) an einen entfernten Server (500) zu übermitteln.

6. Vorrichtung (100) nach Anspruch 5, **dadurch gekennzeichnet, dass** sie einen mit der Steuereinheit (450) verbundenen Sender umfasst, der dazu konfiguriert ist, die vom Sensor (310) erfassten Druckwerte innerhalb der Kammer (110) an einen entfernten Server zu übertragen (500).

7. Sämaschine mit einer Materialabgabevorrichtung (100) gemäß den vorhergehenden Ansprüchen.

## Revendications

1. Dispositif de distribution (100) de matériau pour une machine agricole, le dispositif de distribution (100) comprenant :
• une chambre (110) présentant une entrée (105) et une sortie (106) pour le matériau qui doit être distribué ;
• des moyens pneumatiques pour générer une variation de pression à l'intérieur de la chambre (110) ;
• un élément de distribution rotatif (120) logé dans la chambre (110) et capable de recevoir le matériau en résultat de la valeur de pression à l'intérieur de la chambre (110) et de le transporter de l'entrée (105) à la sortie (106) de la chambre (110),
dans lequel le dispositif de distribution mentionné ci-dessus (100) comprend un capteur de pression (310) capable de mesurer la valeur de pression à l'intérieur de la chambre (110) et connecté à une unité de commande (450) configurée pour recevoir à partir dudit capteur (310) un signal représentatif de la valeur de pression à l'intérieur de la chambre (110), **caractérisé par le fait que** l'unité de commande (450) est connectée à un dispositif d'avertissement optique et/ou acoustique (470) configuré pour être activé si la valeur de pression à l'intérieur de la chambre (110) mesurée par le capteur de pression (310) diffère d'une valeur de seuil prédéfinie (Pₜₕ).

2. Dispositif (100) selon la revendication 1, dans lequel l'élément de distribution rotatif (120) divise la chambre (110) en deux compartiments (111, 112), un premier compartiment (111) étant en communication avec l'entrée (105) et la sortie (106) de la chambre (110) et un second compartiment (112) étant en communication fluidique avec les moyens pneumatiques.

3. Dispositif (100) selon la revendication 2, dans lequel le capteur de pression (310) est placé au niveau d'une paroi (203) qui ferme le second compartiment (112) vis-à-vis de l'extérieur.

4. Dispositif (100) selon la revendication 2, dans lequel le capteur de pression (310) est placé au niveau du premier compartiment (111).

5. Dispositif (100) selon la revendication 1, dans lequel l'unité de commande (450) est configurée pour communiquer des valeurs de pression à l'intérieur de la chambre (110), mesurées par le capteur de pression (310), à un serveur distant (500).

6. Dispositif (100) selon la revendication 5, **caractérisé par le fait qu'**il comprend un émetteur connecté à l'unité de commande (450) configurée pour transmettre les valeurs de pression à l'intérieur de la chambre (110), détectées par le capteur (310), à un serveur distant (500).

7. Machine à semer comprenant un dispositif de distribution de matériau (100) selon les revendications précédentes.
